# EUROPÄISCHE PATENTSCHRIFT

(11) **EP 1 612 582 B1**
(45) Veröffentlichungstag und Bekanntmachung des Hinweises auf die Patenterteilung: **09.09.2009**
(21) Anmeldenummer: 04103049.5
(22) Anmeldetag: 29.06.2004
(51) Int. Cl.: G01T 1/29, G03B 42/02

(54) **Verfahren zum Auslesen von in einer Speicherphosphorschicht gespeicherter Röntgeninformationen**
Apparatus and method to readout X-ray information in a phosphor layer
Dispositif et méthode pour la lecture d'information d'image à partir d'une couche de phosphore

(43) Veröffentlichungstag der Anmeldung: 04.01.2006
(73) Patentinhaber: Agfa-Gevaert HealthCare GmbH, 50670 Köln (DE)
(72) Erfinder: Gerstlauer, Bernd, 81541, München (DE); Brautmeier, Detlef, 85716, Unterschleissheim (DE); Kasper, Axel, 81539, München (DE)

(56) Entgegenhaltungen:
- EP-A- 0 392 504
- US-A1- 2002 024 027
- US-B1- 6 580 525

## Beschreibung

Die Erfindung betrifft ein Verfahren zum Auslesen von in einer Speicherphosphorschicht gespeicherter Röntgeninformation, bei welchem ein aus einer Vielzahl von Bildpunkten zusammengesetztes Röntgenbild erhalten wird.

Röntgenbilder können in sogenannten Speicherphosphoren gespeichert werden, wobei die durch ein Objekt, beispielsweise einen Patienten, hindurchtretende Röntgenstrahlung als latentes Bild in einer Speicherphosphorschicht gespeichert wird. Zum Auslesen des latenten Bildes wird die Speicherphosphorschicht mit Stimulationslicht bestrahlt und dabei zur Aussendung von Emissionslicht angeregt. Das Emissionslicht, dessen Intensität dem in der Speicherphosphorschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

In der Patentschrift US 4,484,073 werden eine Vorrichtung und ein Verfahren beschrieben, bei welchen ein Laserstrahl mittels eines Galvanometerspiegels derart abgelenkt wird, dass der Laserstrahl im Wesentlichen punktförmig auf die auszulesende Speicherphosphorschicht trifft und diese in einem zeilenförmigen Bereich überstreicht. Das hierbei von der Speicherphosphorschicht emittierte Emissionslicht wird von einem Photomultiplier erfasst und in ein elektrisches Signal umgewandelt. Durch einen Transport der Speicherphosphorschicht senkrecht zum zeilenförmigen Bereich wird ein sukzessives Auslesen einzelner zeilenförmiger Bereiche der Speicherphosphorschicht erreicht, so dass schließlich ein zweidimensionales Röntgenbild erhalten wird, welches sich aus einzelnen Zeilen zusammensetzt, die sich ihrerseits jeweils aus einer Vielzahl einzelner Bildpunkte zusammensetzen. Zur Umwandlung des elektrischen Signals des Photomultipliers in einzelne, den jeweiligen Bildpunkten des Röntgenbildes zugeordneten Bildsignale wird mittels eines sogenannten linearen Encoders für jeden Bildpunkt einer Zeile ein Positionsreferenzpuls erzeugt und das elektrische Signal des Photomultipliers jeweils nach einem Positionsreferenzpuls über ein festes Zeitintervall integriert. Der bei der jeweiligen Integration erhaltene Signalwert wird dem entsprechenden Bildpunkt zugeordnet.

Da die Geschwindigkeit des Ablenkelements im Allgemeinen Schwankungen unterliegt, ist die Geschwindigkeit des Laserstrahls nicht über die gesamte auszulesende Zeile konstant, d.h. der Laserstrahl überstreicht innerhalb des vorgegebenen, festen Zeitintervalls nach einem Positionsreferenzpuls je nach momentaner Geschwindigkeit unterschiedlich breite Bereiche der Speicherphosphorschicht. Dies hat zur Folge, dass bei der beschriebenen Integration des elektrischen Signals des Photomultipliers im Allgemeinen unterschiedlich breite Bereiche erfasst werden. So führt eine hohe Momentangeschwindigkeit des Laserstrahls dazu, dass in dem vorgegebenen Zeitintervall ein relativ breiter Teilbereich des einem Bildpunkt entsprechenden Bereichs von dem Laserstrahl gescannt wird. Demgegenüber führt eine niedrige Momentangeschwindigkeit zur Erfassung eines relativ schmalen Teilbereichs des einem Bildpunkt zugeordneten Bereichs der Zeile. Insgesamt muss daher ein teilweiser Informationsverlust und damit eine Beeinträchtigung der Bildqualität des ausgelesenen Röntgenbildes hingenommen werden.

Aus EP 0 392 504 A2 ist ein Verfahren zum Auslesen von Speicherphosphorschichten bekannt, bei dem ein analoges Ausgangssignal in eine Vielzahl von digitalen Signalen umgewandelt wird, aus welchen, z.B. durch Mittelung benachbarter Signale, Bildsignale extrahiert werden.

Es ist Aufgabe der Erfindung, ein Verfahren zum Auslesen von in einer Speicherphosphorschicht gespeicherter Röntgeninformation anzugeben, bei welchem, insbesondere bei vermindertem Informationsverlust, die Bildqualität erhöht wird.

Diese Aufgabe wird gemäß Anspruch 1 durch ein Verfahren mit folgenden Schritten gelöst:
- Bestrahlen der Speicherphosphorschicht mit einem Stimulationslichtstrahl, welcher entlang einer Zeile über die Speicherphosphorschicht bewegt wird und dabei die Speicherphosphorschicht zur Aussendung von Emissionslicht anregen kann,
- Erfassen von von der Speicherphosphorschicht ausgesandtem Emissionslicht und Umwandlung des erfassten Emissionslichts in ein entsprechendes Detektorsignal,
- Ableiten einer Vielzahl von Detektorsignalwerten aus dem Detektorsignal, wobei die Anzahl der abgeleiteten Detektorsignalwerte größter ist als eine vorgegebene Anzahl von Bildpunkten des Röntgenbildes entlang der Zeile, und
- Ableiten jeweils eines Bildsignalwertes für jeden Bildpunkt des Röntgenbildes entlang der Zeile aus jeweils mindestens zwei Detektorsignalwerten,
wobei
- vor dem Auslesen der in der Speicherphosphorschicht gespeicherten Röntgeninformation das zeitliche Verhalten der Bewegung des Stimulationslichtstrahls entlang einer Zeile erfasst wird und
- das erfasste zeitliche Verhalten der Bewegung des Stimulationslichtstrahls entlang der Zeile bei der Ableitung der Bildsignalwerte aus den jeweils mindestens zwei Detektorsignalwerten berücksichtigt wird.

Die Erfindung basiert auf dem Gedanken, zu jedem der einzelnen Bildpunkte in einer Zeile des Röntgenbildes jeweils zwei oder mehrere Detektorsignalwerte aus dem Detektorsignal abzuleiten und daraus jeweils einen zu jedem Bildpunkt gehörenden Bildsignalwert zu berechnen, wobei vor dem Auslesen der Speicherphosphorschicht das zeitliche Verhalten der Bewegung des Stimulationslichtstrahls entlang einer Zeile erfasst und dieses bei der Ableitung von Bildsignalwerten aus den einzelnen Detektorsignalwerten berücksichtigt wird. Dadurch, dass an zwei bzw. mehreren unterschiedlichen Stellen eines Bildpunktes Detektorsignalwerte abgeleitet werden, aus denen dann ein Bildsignalwert für diesen Bildpunkt berechnet wird, werden Informationsverluste gegenüber dem aus dem Stand der Technik bekannten Verfahren vermindert. Darüber hinaus wird durch die Berechnung eines Bildsignalwertes eines Bildpunktes aus zwei bzw. mehreren einzelnen Detektorsignalwerten das Rauschen gegenüber solchen Verfahren vermindert, bei denen für jeden Bildpunkt jeweils nur ein Detektorsignalwert aus dem Detektorsignal abgeleitet wird. Insgesamt wird durch das erfindungsgemäße Verfahren die Bildqualität des ausgelesenen Röntgenbildes erhöht.

In einer bevorzugten Ausgestaltung des Verfahrens ist vorgesehen, dass das Ableiten der Detektorsignalwerte durch Abtasten des Detektorsignals mit einer Abtastfrequenz erfolgt, welche größer ist als der Kehrwert einer mittleren Zeitdauer, welche der Stimulationslichtstrahl im zeitlichen Mittel für die Bewegung über einen Bildpunkt des Röntgenbildes entlang der Zeile benötigt. Die hierbei eingestellte Abtastfrequenz ist somit größer als eine für die Erzeugung von jeweils nur einem Detektorsignalwert je Bildpunkt erforderliche Abtastfrequenz.

Vorzugsweise beträgt die Abtastfrequenz ein ganzzahliges Vielfaches N des Kehrwertes der mittleren Zeitdauer. Hierdurch wird erreicht, dass für jeden Bildpunkt des ausgelesenen Röntgenbildes N Detektorsignalwerte aus dem Detektorsignal abgeleitet werden. Dadurch werden Informationsverluste über die gesamte Länge der auszulesenden Zeile des Röntgenbildes besonders stark reduziert.

Vorzugsweise nimmt die Zahl N einen Wert zwischen 2 und 32, insbesondere zwischen 4 und 16, an. Hierdurch wird trotz Verminderung des Informationsverlustes die jeweils erzeugte Datenmenge vergleichsweise klein gehalten, so dass eine schnelle Ableitung der jeweiligen Bildsignalwerte aus den abgeleiteten Detektorsignalwerten erfolgen kann.

Eine weitere bevorzugte Ausgestaltung des Verfahrens sieht vor, dass jeder Bildsignalwert durch Bildung eines, insbesondere arithmetischen, Mittelwertes aus jeweils mindestens zwei, insbesondere N, zeitlich aufeinander folgenden Detektorsignalwerten erhalten wird. Die Mittelwertbildung stellt eine einfache, effiziente und besonders zuverlässige Berechnungsweise der Bildsignalwerte aus den jeweiligen Detektorsignalwerten dar. Durch Bildung des arithmetischen Mittelwertes wird eine besonders hohe Bildqualität erzielt.

Bei einer weiteren bevorzugten Ausgestaltung des Verfahrens erfolgt das Abtasten des Detektorsignals bei der Ableitung der einzelnen Detektorsignalwerte nach dem sogenannten Sample and Hold-Prinzip. Hierdurch werden die Detektorsignalwerte von dem Detektorsignal auf besonders einfache Weise bei gleichzeitig niedrigem Informationsverlust abgeleitet. Insbesondere kann hierbei gegenüber der aus dem Stand der Technik bekannten Vorrichtung auf eine separate Integratorschaltung verzichtet werden.

Es ist außerdem bevorzugt, dass das Ableiten des Bildsignalwertes eines Bildpunktes aus mindestens zwei Detektorsignalwerten unmittelbar nach dem Ableiten der mindestens zwei Detektorsignalwerte aus dem Detektorsignal erfolgt. Die Bildsignalwerte der Bildpunkte einer Zeile werden somit berechnet, während die auszulesende Zeile noch mit dem Laserstrahl abgescannt wird. Die Berechnung eines Bildsignalwertes erfolgt hierbei stets unmittelbar nach dem Ableiten der für die Berechnung des jeweiligen Bildsignalwertes erforderlichen zwei oder mehreren Detektorsignalwerte, d.h. sobald die für die Berechnung erforderlichen zwei bzw. mehreren Detektorsignalwerte vorliegen. Auf diese Weise wird Speicherplatz für das Speichern der von einer Zeile gewonnenen Bildinformation niedrig gehalten und gleichzeitig ein separater Nachbearbeitungsschritt von Detektorsignalen nach erfolgtem Abtasten einer Zeile vermieden.

Es ist außerdem bevorzugt, dass das Detektorsignal vor dem Abtasten gefiltert wird, wobei Anteile des Detektorsignals eliminiert werden, welche eine Frequenz aufweisen, die größer ist als die halbe Abtastfrequenz. Hierdurch werden etwaige durch das Abtasten von hochfrequenten Detektorsignalanteilen erzeugte Bildartefakte vermieden und damit die Bildqualität noch weiter verbessert.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: eine Vorrichtung zum Auslesen einer Speicherphosphorschicht;
- Fig. 2: einen Verlauf des Detektorsignals;
- Fig. 3: aus dem Detektorsignal abgeleitete Detektorsignalwerte;
- Fig. 4: ein Beispiel für aus den Detektorsignalwerten abgeleitete Bildsignalwerte;
- Fig. 5 a) b): weitere Beispiele für aus Detektorsignalwerten abgeleitete Bildsignalwerte;
- Fig. 6: eine Ausgestaltung der Vorrichtung zum Auslesen einer Speicherphosphorschicht; und
- Fig. 7: einen Querschnitt durch die in Fig. 6 dargestellte Sensorzeile.

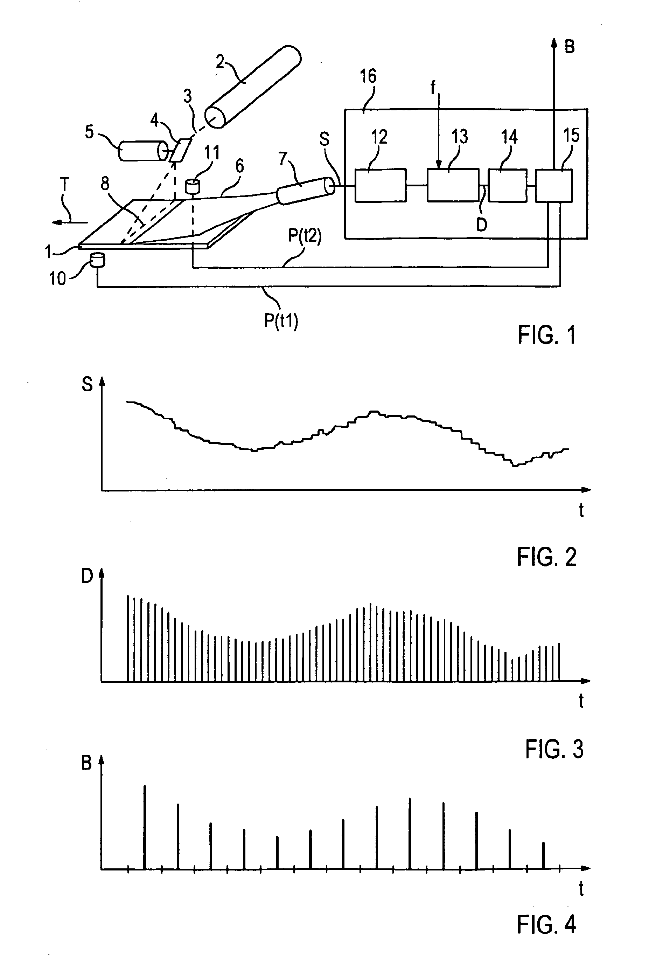

Fig. 1 zeigt eine Vorrichtung zum Auslesen einer Speicherphosphorschicht 1. Durch einen Laser 2 wird ein Stimulationslichtstrahl 3 erzeugt, welcher durch einen von einem Motor 5 in Rotation versetztes Ablenkelement 4 derart abgelenkt wird, dass sich dieser entlang einer Zeile 8 über die auszulesende Speicherphosphorschicht 1 bewegt. Hierbei sendet die Speicherphosphorschicht 1 in Abhängigkeit der darin gespeicherten Röntgeninformation Emissionslicht aus, welches von einer optischen Sammeleinrichtung 6, beispielsweise einem Lichtleiterbündel, gesammelt und von einem optischen Detektor 7, vorzugsweise einem Photomultiplier, erfasst und dabei in ein entsprechendes Detektorsignal S umgewandelt wird. Das Ablenkelement 4 ist vorzugsweise als Spiegel ausgebildet, wie z.B. als Polygonspiegel oder Galvanometerspiegel.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Soll die ausgelesene Zeile 8 beispielsweise aus 1000 Bildpunkten zusammengesetzt sein, so werden aus dem beim Auslesen der Zeile 8 erhaltenen Detektorsignal S 1000 entsprechende Bildsignalwerte B abgeleitet.

Durch einen Transport der Speicherphosphorschicht 1 in Transportrichtung T wird ein sukzessives Auslesen einzelner Zeilen 8 erreicht und damit ein zweidimensionales, aus einzelnen Bildpunkten mit jeweils einem zugehörigen Bildsignalwert B bestehendes Röntgenbild erhalten. Beträgt die Anzahl der in Transportrichtung T ausgelesenen Zeilen 8 beispielsweise 1500, so werden mit jeweils 1000 Bildpunkten pro Zeile für das ausgelesene Röntgenbild insgesamt 1500 x 1000 Bildpunkte mit jeweils einem zugehörigen Bildsignalwert B erhalten.

Fig. 2 zeigt einen beispielhaften Verlauf des in der Vorrichtung gemäß Fig. 1 erzeugten Detektorsignals S. Im Folgenden wird die erfindungsgemäße Ableitung von Bildsignalwerten B aus dem Detektorsignal S näher erläutert.

Das Detektorsignal S wird zunächst (siehe Fig. 1) durch ein Tiefpassfilter 12 gefiltert, wobei höherfrequente Anteile des Detektorsignals S, insbesondere Rauschanteile, eliminiert werden. Das gefilterte Detektorsignal S wird dann einem Analog-Digital-Wandler 13 zugeführt und dort mit einer Abtastfrequenz f abgetastet, wobei bei jedem Abtastvorgang ein Detektorsignalwert D in jeweils digitalen Einheiten erhalten wird. Das Abtasten des Detektorsignals S im Analog-Digital-Wandler 13 erfolgt vorzugsweise nach dem sog. Sample and Hold-Prinzip, wonach beim Abtasten die jeweils aktuelle analoge Signalhöhe des zu einem Abtastzeitpunkt am Analog-Digital-Wandler 13 anliegenden Detektorsignals S gehalten und in einen entsprechenden digitalen Detektorsignalwert D umgewandelt wird. Nach einer Zwischenspeicherung im Speicher 14 werden in einer Recheneinheit 15 aus den Detektorsignalwerten D die Bildsignalwerte B berechnet.

Der Tiefpassfilter 12 ist vorzugsweise derart ausgestaltet, dass durch diesen Anteile des Detektorsignals S eliminiert werden, welche eine Frequenz f_{g} aufweisen, die größer ist als die halbe Abtastfrequenz f: f_{g} > 0,5·f. Hierdurch werden etwaige durch das Abtasten von hochfrequenten Detektorsignalanteilen erzeugte Bildartefakte vermieden und damit die Bildqualität noch weiter verbessert.

Fig. 3 zeigt eine Vielzahl von aus dem in Fig. 2 dargestellten Detektorsignal S abgeleiteten Detektorsignalwerten D über der Zeit t. Der zeitliche Abstand der einzelnen Detektorsignalwerte D zueinander wird durch die Abtastfrequenz f des Analog-Digitial-Wandlers 13 bestimmt. Jedem Zeitpunkt entspricht hierbei ein bestimmter Ort des Stimulationslichtstrahls 3 auf der Zeile 8 der Speicherphosphorschicht 1.

Die Abtastfrequenz f ist so gewählt, dass für jeden einzelnen Bildpunkt entlang der Zeile 8 mindestens zwei Detektorsignalwerte B erhalten werden, aus welchen dann ein jeweils zu einem Bildpunkt gehörender Bildsignalwert errechnet werden kann. Zur Vereinfachung und besseren Anschaulichkeit wird in diesem Beispiel angenommen, dass die ausgelesene Zeile 8 aus lediglich 13 Bildpunkten bestehen soll. Die Abtastfrequenz f ist in diesem Beispiel so gewählt, dass für jeden der 13 Bildpunkte jeweils fünf Detektorsignalwerte D erhalten wurden.

Die für dieses Beispiel entsprechend abgeleiteten Bildsignalwerte B sind in Fig. 4 dargestellt, wobei aus jeweils fünf der in Fig. 3 dargestellten Detektorsignalwerte D ein Bildsignalwert B errechnet wurde, indem aus den einzelnen Detektorsignalwerten D jeweils der arithmetische Mittelwert ermittelt wurde.

Die Abtastfrequenz f beträgt in diesem Beispiel das Fünffache des Kehrwertes einer mittleren Zeitdauer Δt, welche der Stimulationslichtstrahl 3 im zeitlichen Mittel für die Bewegung über einen Bildpunkt des Röntgenbildes entlang der Zeile 8 benötigt. Das folgende Beispiel soll dies verdeutlichen: Beträgt die mittlere Zeitdauer Δt für die Bewegung des Stimulationslichtstrahls 3 über einen Bildpunkt des Röntgenbildes im Mittel eine Mikrosekunde (1µs), so ergibt sich eine Abtastfrequenz f von 5/Δt = 5/1µs = 5 MHz.

Es ist außerdem von Vorteil, den Bildsignalwert B eines Bildpunktes aus den jeweiligen Detektorsignalwerten D unmittelbar nach dem Ableiten dieser Detektorsignalwerte D aus dem Detektorsignal S zu berechnen. Die einzelnen Bildsignalwerte B der Zeile 8 werden also zeitlich parallel bzw. zeitgleich mit dem Abtasten der Zeile 8 ermittelt. Die Berechnung eines einzelnen Bildpunktes erfolgt dabei stets unmittelbar nach dem Ableiten der für die Berechnung des jeweiligen Bildsignalwerte B erforderlichen zwei oder mehreren Detektorsignalwerte D aus dem Detektorsignal S. Dadurch brauchen lediglich die jeweils zu einem Bildsignalwert B zusammenzufassenden Detektorsignalwerte D im Speicher 14 der Verarbeitungseinrichtung 16 gespeichert zu werden, bevor sie in der Rechenheinheit 15 weiterverarbeitet werden. Der Speicherbedarf im Speicher 14 ist dadurch gering. Darüber hinaus kann durch die zeitgleiche Verarbeitung der Detektorsignalwerte D während des Auslesens der Zeile 8 eine Nachverarbeitung der Detektorsignalwerte D nach dem Ende des Auslesens der Zeile 8 entfallen.

Das mehrmalige Abtasten des Detektorsignals S für jeden einzelnen Bildpunkt, das auch als Oversampling bezeichnet wird, und die Ableitung eines entsprechenden Bildsignalwertes für jeden Bildpunkt der Zeile 8 aus jeweils mehreren Detektorsignalwerten führt insgesamt zu einer Verminderung des dem Detektorsignal S überlagerten Rauschens und damit zu einer verbesserten Bildqualität bei gleichzeitig geringeren Informationsverlusten im Vergleich zu den aus dem Stand der Technik bekannten Vorrichtungen bzw. Verfahren.

Die im Zusammenhang mit den Figuren 2 bis 4 näher erläuterte Signalverarbeitung des Detektorsignals S ist besonders für Scanner mit guten Gleichlaufeigenschaften geeignet, bei welchen der Stimulationslichtstrahl 3 mit im Wesentlichen unveränderlicher Geschwindigkeit über die jeweils auszulesende Zeile 8 der Speicherphosphorschicht 1 bewegt wird. Dies wird in der Regel durch optisch hochwertige Ablenkelemente 4, insbesondere Galvanometer- oder Polygonspiegel, in Verbindung mit einem Motor 5 mit guten Gleichlaufeigenschaften erreicht.

Um die Bildqualität der mit solchen Scannern ausgelesenen Röntgenbilder weiter zu verbessern oder im Falle von kostengünstigeren Scannern mit weniger guten optischen Elementen oder Gleichlaufeigenschaften dennoch ein hohes Maß an Bildqualität zu erzielen, wird vorzugsweise die nachfolgend näher beschriebene Verarbeitung des Detektorsignals S durchgeführt.

Bei einer ersten Variante dieses Verfahrens weist die entsprechende Vorrichtung (siehe Fig. 1) zwei Sensoren 10 und 11 auf, die im Bereich des Anfangs bzw. Endes der Zeile 8 angeordnet sind, entlang welcher sich der Stimulationslichtstrahl 3 bewegt.

Wird der Stimulationslichtstrahl 3 mit dem Ablenkelement 4 in Richtung der Zeile 8 abgelenkt, so passiert dieser den ersten Sensor 10 vor dem Scannen der Zeile 8 und den zweiten Sensor 11 nach dem Scannen der Zeile 8. Das Licht des Stimulationslichtstrahls 3 wird dabei von den beiden lichtempfindlichen Sensoren 10 und 11 erfasst und in entsprechende elektrische Impulse P(t1) und P(t2) zu den Referenzzeitpunkten t1 bzw. t2 umgewandelt und an eine Recheneinheit 15 der Verarbeitungseinrichtung 16 weitergeleitet.

Das während der Bewegung des Stimulationslichtstrahls 3 über die Zeile 8 der Speicherphosphorschicht 1 erhaltene Detektorsignal S wird, wie bereits näher erläutert, durch ein Tiefpassfilter 12 gefiltert und in einem Analog-Digital-Wandler 13 mit einer Abtastfrequenz f abgetastet, wobei eine Vielzahl von Detektorsignalwerten D erhalten wird. Die Detektorsignalwerte D werden in einem Speicher 14 zwischengespeichert.

Die Recheneinheit 15 greift auf die im Speicher 14 zwischengespeicherten Detektorsignalwerte D zu und leitet daraus einzelne Bildsignalwerte B ab. Die Ablei-tung der Bildsignalwerte B, insbesondere die Zuordnung einzelner Detektorsignalwerte D zu jeweils einem Bildpunkt und die Berechnung des Bildsignalwertes aus den zugeordneten Detektorsignalwerten D, erfolgt bei dieser Variante der Signalverarbeitung in Abhängigkeit von den Referenzzeitpunkten t1 und t2.

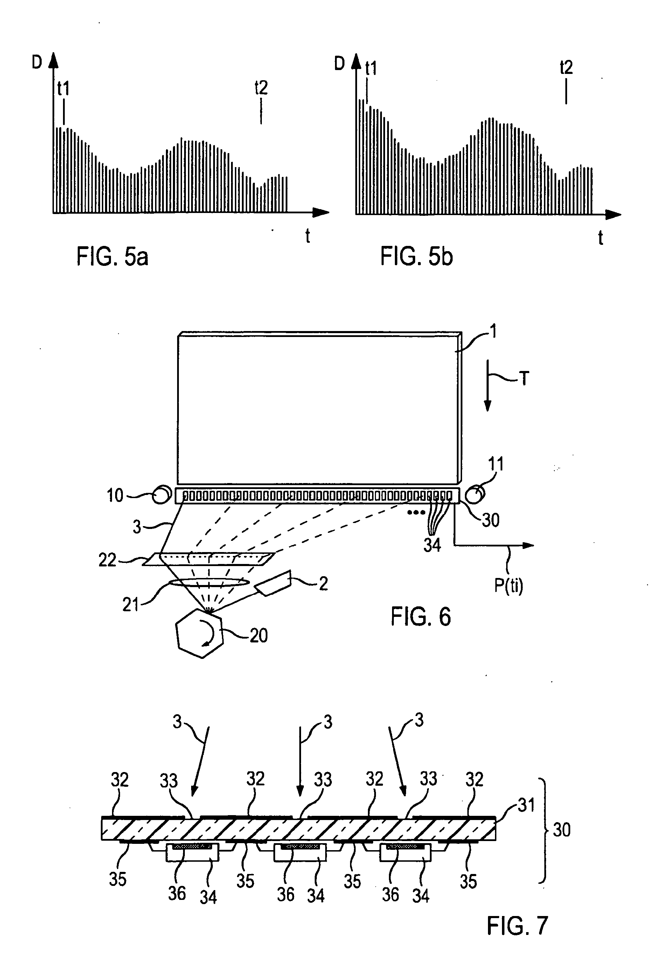

Fig. 5a zeigt ein erstes Beispiel von Detektorsignalwerten D über der Zeit t, welche aus dem Detektorsignal S für eine Zeile 8 abgeleitet wurden. Neben den Detektorsignalwerten D sind in dem Diagramm die beiden Referenzzeitpunkte t1 und t2 eingetragen, zu welchen der Stimulationslichtstrahl 3 die beiden Sensoren 10 bzw. 11 passiert. Die für eine Ableitung von Bildsignalwerten B für die einzelnen Bildpunkte des Röntgenbildes entlang der Zeile 8 relevanten Detektorsignalwerte D liegen zwischen den beiden Referenzzeitpunkten t1 und t2. Dementsprechend werden lediglich diese Detektorsignalwerte D für die Ableitung der einzelnen Bildsignalwerte B herangezogen.

In einem weiteren Auslesevorgang werden beispielhaft die in Fig. 5b dargestellten Detektorsignalwerte D für eine weitere Zeile 8 ermittelt. Der zweite Referenzzeitpunkt t2 wird hierbei gegenüber dem in Fig. 5a dargestellten Beispiel erst zu einem späteren Zeitpunkt erreicht. Dies ist auf Gleichlaufschwankungen des Stimulationslichtstrahls 3 während dessen Bewegung entlang der Zeile 8 zurückzuführen. Im zeitlichen Mittel betrachtet, überstreicht der Stimulationslichtstrahl 3 die auszulesende Zeile 8 hierbei mit einer Geschwindigkeit, welche niedriger ist als in dem in Fig. 5a dargestellten Beispiel.

Dieser Effekt wird erfindungsgemäß dadurch kompensiert, dass die jeweils zwischen den beiden Referenzzeitpunkten t1 und t2 erfassten Detektorsignalwerte D auf die vorgegebene Anzahl von einzelnen Bildpunkten verteilt werden. Soll eine Zeile 8 des ausgelesenen Röntgenbildes beispielsweise 1000 Bildpunkte umfassen, und werden in dem in Fig. 5a dargestellten Beispiel zwischen den beiden Referenzzeitpunkten t1 und t2 5000 Detektorsignalwerte D abgeleitet, so werden jedem einzelnen Bildpunkt jeweils fünf Detektorsignalwerte zugeordnet und aus den jeweils zugeordneten Detektorsignalwerten ein Bildsignalwert errechnet, insbesondere durch Mittelwertbildung.

Für das in Fig. 5b dargestellte Beispiel wird angenommen, dass zwischen den beiden Referenzzeitpunkten t1 und t2 insgesamt 5100 Detektorsignalwerte Derhalten werden. Diese werden nun ebenfalls auf die 1000 vorgegebenen Bildpunkte verteilt. Wird beispielsweise angenommen, dass sich die Gleichlaufschwankungen des Stimulationslichtstrahls im Wesentlichen gleichmäßig über den gesamten Zeitraum zwischen den beiden Referenzzeitpunkten t1 und t2 verteilen, so werden jedem Bildpunkt im Mittel 5,1 Detektorsignalwerte D zugeordnet und daraus durch Mittelwertbildung ein entsprechender Bildsignalwert abgeleitet.

Eine solche Mittelwertbildung kann beispielsweise aus einer entsprechenden Gewichtung von nichtganzzahligen Anteilen der Detektorsignalwerte D erfolgen. Beispielsweise würden bei einer solchen Mittelwertbildung für den ersten Bildsignalwert im genannten Beispiel der Fig. 5b fünf Detektorsignalwerte zu jeweils 100 % und der darauf folgende sechste Detektorsignalwert zu nur 10 % gewichtet werden.

Alternativ können einzelne Detektorsignalwerte stets vollständig einzelnen Bildpunkten zugeordnet werden. Im dargestellten Beispiel der Fig. 5b wäre es beispielsweise denkbar, stets neun benachbarten Bildpunkten jeweils fünf Detektorsignalwerte D zuzuordnen und dem jeweils darauf folgenden zehnten Bildpunkt sechs Detektorsignalwerte zuzuordnen. Alle weiteren Zuordnungen von Detektorsignalwerten D zu Bildpunkten erfolgen dann entsprechend.

Bei diesen Berechnungsmethoden wird eine statistische Gleichverteilung von Geschwindigkeitsschwankungen des Stimulationslichtstrahls 3 während dessen Bewegung über die Zeile 8 angenommen. Damit können Bildfehler infolge von Gleichlaufschwankungen des Stimulationslichtstrahls, wie z.B. sogenannte Jitter-Effekte, auf einfache und zuverlässige Weise vermindert werden.

Ein Verfahren zur weiteren Verbesserung der Bildqualität sieht vor, das zeitliche Verhalten der Bewegung des Stimulationslichtstrahls entlang einer Zeile zu erfassen und dieses bei der Ableitung von Bildsignalwerten B aus den einzelnen Detektorsignalwerten D zu berücksichtigen.

In Fig. 6 ist eine bevorzugte Ausgestaltung einer entsprechenden Vorrichtung zur Durchführung dieses Verfahrens dargestellt. Der von einem Laser 2 erzeugte Stimulationslichtstrahl 3 wird durch einen rotierenden Polygonspiegel 20 abgelenkt und trifft nach Durchlaufen eines geeigneten optischen Systems, welches im dargestellten Beispiel aus einer Linse 21 und einem Zylinderspiegel 22 besteht, auf eine Sensorzeile 30. Die Sensorzeile 30 weist eine Vielzahl regelmäßig beabstandeter lichtempfindlicher Sensoren 34 auf. Während der Bewegung des Stimulationslichtstrahls 3 entlang der Sensorzeile 30 überstreicht dieser sukzessive die einzelnen Sensoren 34. Dabei wird jeweils zu einem Referenzzeitpunkt ti ein Puls P(ti) erzeugt, welcher an eine Verarbeitungseinrichtung (nicht dargestellt) weitergeleitet wird.

Die Sensorzeile 30 kann in der Ebene der Speicherphosphorschicht 1, alternativ aber auch in geringem Abstand vor oder hinter der Ebene der Speicherphosphorschicht 1 positioniert sein.

Vorzugsweise werden auf diese Weise vor dem eigentlichen Auslesen der Speicherphosphorschicht 1 eine Vielzahl von Referenzzeitpunkten ti während mindestens einer vollständigen 360°-Drehung des Polygonspiegels erfasst und in der Verarbeitungseinrichtung gespeichert. Die Sensorzeile 30 kann dann aus dem Strahlengang entfernt werden, z.B. durch eine geeignete mechanische Schwenkvorrichtung (nicht dargestellt). Falls die Sensorzeile 30 in einem geringen Abstand hinter der Speicherphosphorschicht 1 angeordnet ist, kann sie an ihrer Position bleiben und wird beim Auslesen der Speicherphosphorschicht 1 durch diese verdeckt.

Der eigentliche Auslesevorgang der Speicherphosphorschicht 1 kann nun beginnen, indem diese entlang der Transportrichtung T am Strahlengang vorbeigeführt wird. Werden dabei, wie bereits im Zusammenhang mit den Fig. 1, 5a und 5b erläutert, mittels der beiden Sensoren 10 und 11 jeweils ein erster und zweiter Referenzzeitpunkt t1 und t2 erfasst, so kann die Zuordnung der zwischen den beiden Referenzzeitpunkten t1 und t2 erhaltenen Detektorsignalwerte D zu einzelnen Bildpunkten unter gleichzeitiger Berücksichtigung der vorab erfassten Referenzzeitpunkte ti erfolgen. Aus den zugeordneten Detektorsignalwerten D werden dann die entsprechenden Bildsignalwerte B abgeleitet.

Für die Zuordnung von zwischen jeweils zwei Referenzzeitpunkten tn und tn+1 abgeleiteten Detektorsignalwerten D zu den einzelnen Bildpunkten, welche zwischen der n-ten und (n+1)-ten Referenzposition liegen, gelten hierbei die Ausführungen zu dem im Zusammenhang mit den Fig. 5a und 5b beschriebenen Verfahren entsprechend.

Fig. 7 zeigt einen Querschnitt (Ausschnitt) durch die in Fig. 6 dargestellte Sensorzeile 30. Die Sensorzeile 30 umfasst eine Leiterplatte 31, welche aus mit Glasfasern verstärktem Kunstharz besteht und für das Licht des Stimulationslichtstrahls 3 zumindest teilweise transparent ist.

Auf der dem Stimulationslichtstrahl 3 zugewandten Seite der Leiterplatte 31 werden durch Maskierung einer darauf befindlichen Metallschicht 32, welche vorzugsweise aus Kupfer besteht, einzelne Schlitzblenden 33 erzeugt.

Auf der gegenüberliegenden Seite der Leiterplatte 31 sind jeweils im Bereich der Schlitzblenden 33 die Sensoren 34, insbesondere in Form von Fotodioden, angebracht, welche eine lichtempfindliche Schicht 36 auf der der Leiterplatte 31 zugewandten Seite aufweisen. Die Sensoren 34 sind mit auf der Leiterplatte 31 befindlichen Leiterbahnen 35 verbunden und entsprechend verschaltet, beispielsweise über eine Parallelschaltung. Als Sensoren 34 sind insbesondere Fotodioden in SMD-Bauform geeignet, wie z.B. vom Typ *BPW34 Reverse Gullwing* der Firma *Osram.*

Durch diese Ausführung der Sensorzeile 30 wird eine besonders einfache, kompakte und zuverlässige Erfassung der Referenzzeitpunkte ti entlang der Sensorzeile 30 erreicht. Hierdurch wird bei der oben beschriebenen Ableitung von Bildsignalwerten B aus den Detektorsignalwerten D eine besonders hohe Bildqualität erzielt.

## Patentansprüche

1. Verfahren zum Auslesen von in einer Speicherphosphorschicht (1) gespeicherter Röntgeninformation, bei welchem ein aus einer Vielzahl von Bildpunkten zusammengesetztes Röntgenbild erhalten wird, mit folgenden Schritten:
- Bestrahlen der Speicherphosphorschicht (1) mit einem Stimulationslichtstrahl (3), welcher entlang einer Zeile (8) über die Speicherphosphorschicht (1) bewegt wird und dabei die Speicherphosphorschicht (1) zur Aussendung von Emissionslicht anregen kann,
- Erfassen von von der Speicherphosphorschicht (1) ausgesandtem Emissionslicht und Umwandlung des erfassten Emissionslichts in ein entsprechendes Detektorsignal (S),
- Ableiten einer Vielzahl von Detektorsignalwerten (D) aus dem Detektorsignal (S), wobei die Anzahl der abgeleiteten Detektorsignalwerte (D) größer ist als eine vorgegebene Anzahl von Bildpunkten des Röntgenbildes entlang der Zeile (8), und
- Ableiten jeweils eines Bildsignalwertes (B) für jeden Bildpunkt des Röntgenbildes entlang der Zeile (8) aus jeweils mindestens zwei Detektorsignalwerten (D),
**dadurch gekennzeichnet, dass**
- vor dem Auslesen der in der Speicherphosphorschicht (1) gespeicherten Röntgeninformation das zeitliche Verhalten der Bewegung des Stimulationslichtstrahls (3) entlang einer Sensor Zeile (30) erfasst wird und
- das erfasste zeitliche Verhalten der Bewegung des Stimulationslichtstrahls (3) entlang der Sensor Zeile (30) bei der Ableitung der Bildsignalwerte (B) aus den jeweils mindestens zwei Detektorsignalwerten (D) berücksichtigt wird.

2. Verfahren nach Anspruch 1, **dadurch gekennzeichnet, dass** das Ableiten der Detektorsignalwerte (D) durch Abtasten des Detektorsignals (S) mit einer Abtastfrequenz (f) erfolgt, welche größer ist als der Kehrwert einer mittleren Zeitdauer (Δt), welche der Stimulationslichtstrahl (3) im zeitlichen Mittel für die Bewegung über einen Bildpunkt des Röntgenbildes entlang der Zeile (8) benötigt: f> 1/Δt.

3. Verfahren nach Anspruch 2, **dadurch gekennzeichnet, dass** die Abtastfrequenz (f) einem ganzzahligen Vielfachen (N) des Kehrwertes der mittleren Zeitdauer (Δt) entspricht: f = N/Δt, wobei N eine ganze Zahl und größer als 1 ist.

4. Verfahren nach Anspruch 3, **dadurch gekennzeichnet, dass** das Vielfache (N) zwischen dem 2- und 32fachen, insbesondere zwischen dem 4- und 16flachen, liegt.

5. Verfahren nach einem der Ansprüche 1 bis 4, **dadurch gekennzeichnet, dass** jeder Bildsignalwert (B) durch Bildung eines, insbesondere arithmetischen, Mittelwertes aus jeweils mindestens zwei, insbesondere N, aufeinander folgenden Detektorsignalwerten (D) erhalten wird.

6. Verfahren nach einem der Ansprüche 2 bis 5, **dadurch gekennzeichnet, dass** das Abtasten des Detektorsignals (S) nach dem Sample and Hold-Prinzip erfolgt.

7. Verfahren nach einem der vorangehenden Ansprüche, **dadurch gekennzeichnet, dass** das Ableiten des Bildsignalwertes (B) eines Bildpunktes, insbesondere durch Bildung eines Mittelwertes, aus mindestens zwei Detektorsignalwerten (D) unmittelbar nach dem Ableiten der mindestens zwei Detektorsignalwerte (D) aus dem Detektorsignal (S) erfolgt.

8. Verfahren nach einem der Ansprüche 2 bis 7, **dadurch gekennzeichnet, dass** das Detektorsignal (S) vor dem Abtasten gefiltert wird, wobei Anteile des Detektorsignals (S) eliminiert werden, welche eine Frequenz (f_{g}) aufweisen, die größer ist als die halbe Abtastfrequenz (f): f_{g} > 0,5·f.

## Claims

1. A method for reading out X-ray information stored in a storage phosphor layer (1) wherein an X-ray image made up of a plurality of pixels is obtained, having the following steps:
- irradiating the storage phosphor layer (1) with a stimulation light beam (3) which is moved over the storage phosphor layer (1) along a line (8) and can thus stimulate the storage phosphor layer (1) to emit emission light,
- collecting emission light emitted by the storage phosphor layer (1) and converting the emission light collected into a corresponding detector signal (S),
- deriving a plurality of detector signal values (D) from the detector signal (S), the number of derived detector signal values (D) being greater than a pre-specified number of pixels of the X-ray image along the line (8), and
- deriving a respective image signal value (B) for each pixel of the X-ray image along the line (8) from at least two detector signal values (D) respectively,
**characterised in that**
- before reading out the X-ray information stored in the storage phosphor layer (1) the chronological characteristics of the movement of the stimulation light beam (3) along a sensor line (30) are collected, and
- the collected chronological characteristics of the movement of the stimulation light beam (3) along the sensor line (30) are taken into account when deriving the image signal values (B) from the respective at least two detector signal values (D).

2. The method according to Claim 1, **characterised in that** the derivation of the detector signal values (D) is implemented by sampling the detector signal (S) with a sampling frequency (f) which is greater than the reciprocal value of an average period of time (Δt) which the stimulation light beam (3) requires in the chronological average for the movement over a pixel of the X-ray image along the line (8): f > 1/Δt.

3. The method according to Claim 2, **characterised in that** the sampling frequency (f) corresponds to a whole number multiple (N) of the reciprocal value of the average period of time (Δt): f = n/Δt, N being a whole number and greater than 1.

4. The method according to Claim 3, **characterised in that** the multiple (N) comes between times 2 and times 32, in particular between times 4 and times 16.

5. The method according to any of Claims 1 to 4, **characterised in that** each image signal value (B) is obtained by forming an average value, in particular an arithmetical average value, from respectively at least two, in particular N, consecutive detector signal values (D).

6. The method according to any of Claims 2 to 5, **characterised in that** the sampling of the detector signal (S) is implemented according to the principle of sample and hold.

7. The method according to any of the preceding claims, **characterised in that** the derivation of the image signal value (B) of a pixel, in particular by forming an average value, is implemented from at least two detector signal values (D) immediately after deriving the at least two detector signal values (D) from the detector signal (S).

8. The method according to any of Claims 2 to 7, **characterised in that** the detector signal (S) is filtered before sampling, portions of the detector signal (S) which have a frequency (f_{g}) which is greater than half the sampling frequency (f): f_{g} > 0.5.f, being eliminated.

## Revendications

1. Procédé de lecture d'une information radiographique mémorisée dans une couche de mémorisation au phosphore (1), permettant d'obtenir une image radiographique constituée d'une multitude de points d'image, comportant les étapes suivantes :
- l'exposition de la couche de mémorisation au phosphore (1) à un faisceau de lumière de stimulation (3) pouvant se déplacer le long d'une ligne (8) au-dessus de la couche de mémorisation au phosphore (1) et pouvant en l'occurrence stimuler la couche de mémorisation au phosphore (1) pour émettre de la lumière d'émission,
- la captation de la lumière d'émission émise par la couche de mémorisation au phosphore (1) et la conversion de la lumière d'émission captée en un signal de détection (S) correspondant,
- la dérivation d'une pluralité de valeurs de signaux de détection (D) à partir du signal de détection (S), le nombre des valeurs de signaux de détection (D) dérivées étant supérieur à un nombre donné de points d'image de l'image radiographique le long de la ligne (8), et
- la dérivation d'une valeur de signal d'image (B) respective pour chaque point d'image de l'image radiographique le long de la ligne (8) à partir, respectivement, d'au moins deux valeurs de signaux de détection (D),
**caractérisé en ce que**
- le comportement dans le temps du déplacement du faisceau de lumière de stimulation (3) le long d'une ligne de détection (30) est détecté avant la lecture de l'information radiographique mémorisée dans la couche de mémorisation au phosphore (1), et
- le comportement dans le temps du déplacement du faisceau de lumière de stimulation (3) le long de la ligne de détection (30) qui a été détecté est pris en considération lors de la dérivation des valeurs de signaux d'image (B) à partir des au moins deux valeurs de signaux de détection (D) respectives.

2. Procédé selon la revendication 1, **caractérisé en ce que** la dérivation des valeurs de signaux de détection (D) s'effectue par le balayage du signal de détection (S) avec une fréquence de balayage (f) qui est supérieure à la valeur inverse d'une durée moyenne (Δt) nécessaire au faisceau de lumière de stimulation (3), en moyenne dans le temps, pour se déplacer au-dessus d'un point d'image de l'image radiographique le long de la ligne (8) : f > 1/Δt.

3. Procédé selon la revendication 2, **caractérisé en ce que** la fréquence de balayage (f) correspond à un multiple entier (N) de la valeur inverse de la durée moyenne (Δt) : f = N/Δt, N étant un nombre entier supérieur à 1.

4. Procédé selon la revendication 3, **caractérisé en ce que** le multiple (N) se situe entre 2 et 32 fois, notamment entre 4 et 16 fois.

5. Procédé selon l'une des revendications 1 à 4, **caractérisé en ce que** chaque valeur de signal d'image (B) est obtenue par la formation d'une valeur moyenne, notamment arithmétique, d'au moins deux, notamment N, valeurs de signaux de détection (D) successives respectives.

6. Procédé selon l'une des revendications 2 à 5, **caractérisé en ce que** la détection du signal de détection (S) s'effectue selon le principe d'échantillonnage/blocage.

7. Procédé selon l'une des revendications précédentes, **caractérisé en ce que** la dérivation de la valeur de signal d'image (B) d'un point d'image, notamment par formation d'une valeur moyenne, à partir d'au moins deux valeurs de signaux de détection (D) s'effectue immédiatement après la dérivation d'au moins deux valeurs de signaux de détection (D) à partir du signal de détection (S).

8. Procédé selon l'une des revendications 2 à 7, **caractérisé en ce que** le signal de détection (S) est filtré avant la détection, ce qui permet d'éliminer les parties du signal de détection (S) présentant une fréquence (f_{g}) supérieure à la demi-fréquence de balayage (f) : f_{g} > 0,5 f.
